(19) Europäisches Patentamt
European Patent Office
Office européen des brevets

(11) **EP 1 794 212 B1**

(12) **EUROPÄISCHE PATENTSCHRIFT**

(45) Veröffentlichungstag und Bekanntmachung des Hinweises auf die Patenterteilung:
**03.09.2008   Patentblatt 2008/36**

(21) Anmeldenummer: **05784577.8**

(22) Anmeldetag: **16.09.2005**

(51) Int Cl.:
***C08G 75/00*** *(2006.01)*

(86) Internationale Anmeldenummer:
**PCT/EP2005/009959**

(87) Internationale Veröffentlichungsnummer:
**WO 2006/037441 (13.04.2006 Gazette 2006/15)**

(54) **VERFAHREN ZUR HERSTELLUNG VON POLYMEREN HYDROXYLALKYLTERMINIERTEN POLYSULFIDEN**

METHOD FOR PRODUCTION OF POLYMERIC HYDROXYLALKYL TERMINATED POLYSULPHIDES

PROCEDE POUR PRODUIRE DES POLYSULFURES POLYMERES A TERMINAISON HYDROXYALKYLE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **01.10.2004   DE 102004047791**

(43) Veröffentlichungstag der Anmeldung:
**13.06.2007   Patentblatt 2007/24**

(73) Patentinhaber: **Akzo Nobel N.V.**
**6824 BM  Arnhem (NL)**

(72) Erfinder:
• **ZEITLER, Michael**
  **53347 Alfter (DE)**
• **KOTTNER, Nils**
  **078628 Rottweil (DE)**
• **BERGFELD, Manfred**
  **63906 Erlenbach-Mechenhard (DE)**

(74) Vertreter: **Schalkwijk, Pieter Cornelis**
**Akzo Nobel N.V.**
**Intellectual Property Department**
**P.O. Box 9300**
**6800 SB Arnhem (NL)**

(56) Entgegenhaltungen:
| | |
|---|---|
| EP-A- 0 043 043 | DE-A1- 4 214 847 |
| DE-A1- 10 220 383 | US-A- 3 301 831 |
| US-A- 3 335 201 | US-A- 3 817 947 |
| US-A- 4 124 645 | |

**Beschreibung**

Die Erfindung betrifft ein Verfahren zur Herstellung von polymeren hydroxyalkyl-, insbesondere hydroxyethylterminierten Polysulfiden durch Umsetzung von monomeren hydroxyalkylterminierten Polysulfiden, insbesondere Dithioglycolen mit Formaldehyd in Gegenwart eines sauren Katalysators.

Polymere hydroxyalkylterminierte Polysulfide sowie deren Herstellung sind bereits seit langem bekannt

So offenbart die US PS 2,582,605 ein Verfahren, bei dem beispielsweise Bis-β-hydroxyethyldisulfid mit sich selber oder mit anderen Hydroxygruppen aufweisenden Verbindungen wie Glykolen kondensiert wird, um entsprechende Polyether zu bilden. Als Katalysator wird para-Toluolsulfonsäure genannt.

DE 10220383 beschreibt ein Verfahren zur Herstellung von Polymethylenpolysulfiden durch eine Reaktion von Formaldehyd mit Schwefel und Schwefelwasserstoff in Gegenwart eines alkalischen Katalysators, wobei das Formaldehyd als Oligomer oder als Polymer zugesetzt wird.

DE 42 14 847 beschreibt ein Verfahren zur Herstellung von 2,2'-Dichlordiethylformal durch eine Reaktion von 2-Chlorethanol und Paraformaldehyd in Gegenwart eines sauren Katalysators. Mit dem Dichlordiethylformal-Produkt kann ein Polysulfidpolymer hergestellt werden.

EP 43 043 beschreibt ein Verfahren zur Herstellung von Polysulfiden durch eine Reaktion von Schwefelwasserstoff oder Schwefel mit Formaldehyd. Die durch diese Reaktion gebildeten Polysulfide enden regelmäßig in Merkaptangruppen. Als Katalysator kann ein saurer Katalysator verwendet werden.

US 3,817,947 beschreibt ein Verfahren zur Herstellung von Polysulfiden durch eine Reaktion von Epichlorhydrin und Dichlorethylformal mit Polysulfiden eines Alkali-oder Erdalkalimetalls. Die entstehenden Polysulfide besitzen SH-Endgruppen und können einige Hydroxylgruppen entlang der Polymerkette enthalten.

US 3,335,201 beschreibt Polysulfide mit Amingruppe und ein Verfahren zur Herstellung eines Harzes durch eine Reaktion eines Polyepoxids mit einem Polysulfid mit Amingruppe. Das Polysulfid mit Amingruppe wird hergestellt durch eine Reaktion eines Polysulfids mit Hydroxyl- oder Merkaptangruppe mit Formaldehyd, Phenol und einem Amin. Angeblich ist kein Katalysator erforderlich. Das Harz entsteht durch eine Reaktion von Polysulfid mit Amingruppe mit dem Epoxid. Es wird spezifisch darauf hingewiesen, dass diese Reaktion keinen Katalysator erfordert.

US 3,301,831 beschreibt ein Verfahren zur Herstellung von schwefligen Kondensationsprodukten. Die Produkte entstehen durch eine Reaktion einer Verbindung (A) mit einer Halogen- oder $SO_2R$-Endgruppe mit einem Thiosulfat (B). Die Verbindung A kann durch eine Reaktion eines Alkohols mit Formaldehyd in Gegenwart einer wässrigen Säure und anschließende Reaktion mit Epichlorhydrin hergestellt werden.

Bekannt ist ferner aus der US 4,124,645, dass die Herstellung derartiger polymerer hydroxyalkylterminierter Polysulfide außer durch Polyetherbildung mit sich selbst oder einem anderen Polyether durch Umsetzung von Formaldehyd mit dem monomeren Hydroxalkylpolysulfid bewerkstelligt werden kann.

Die dort beschriebene Reaktion wird ebenfalls in Gegenwart von sauren Katalysatoren wie pata-Toluolsulfonsäure durchgeführt. Auch bei diesem Verfahren handelt es sich um eine homogen-katalytische Reaktion.

Nachteilig bei diesem Verfahren ist, dass der verwendete saure Katalysator nach Beendigung der Reaktion neutralisiert werden muss, z. B. para-Toluolsulfonsäure mit Ammoniak, wie in Beispiel 1 der US 4,124,645 nachzulesen ist, sodass das Reaktionsgemisch nicht nur von Wasser und von dem ggf. mitverwendeten Lösungsmittel wie z. B. Benzol befreit werden, sondern dass auch der Katalysator abgetrennt werden muss, da dieser bei weiteren Reaktionen stören könnte und im übrigen auch als Verunreinigung von Nachteil ist.

Nachteilig ist ferner, dass es mit den bekannten Verfahren nicht möglich ist, einheitliche Produkte zu gewinnen. So lassen die nach dem Stand der Technik erhaltenen hydroxylalkylterminierten polymeren Polysulfide, was die Molekulargewichtsverteilung der erhaltenen Polymere betrifft, zu wünschen übrig. So ist die Uneinheitlichkeit U unverhältnismäßig hoch.

U ist definiert als

$$U = \frac{M_w}{M_n} - 1$$

Auch entstehen infolge nicht einheitlicher Polykondensation Moleküle mit unterschiedlichem Aufbau (blockcopolymere Strukturen).

Für viele Einsatzzwecke sind jedoch maßgeschneiderte Produkte mit streng alternierender Copolymerstruktur erwünscht, insbesondere wenn diese polymeren Polysulfide nicht nur als solche zum Einsatz gelangen, sondern auch als Ausgangsprodukte für die Herstellung von weiter funktionalisierten Polysulfiden oder zur Herstellung von Polysulfiden mit höheren Molekulargewichten dienen sollen.

Es besteht deshalb noch ein Bedürfnis nach polymeren hydroxylalkylterminierten Polysulfiden, die sich durch gute Eigenschaften auszeichnen, insbesondere was ihre Polydispersität und Struktureinheitlichkeit betrifft, sowie nach einem entsprechenden Herstellungsverfahren.

Aufgabe der Erfindung ist es deshalb, ein Verfahren zur Herstellung von polymeren hydroxyalkylterminierten Polysulfiden zur Verfügung zu stellen, das einfach und wirtschaftlich (u. a. mit höherer Reaktionsgeschwindigkeit) durchzuführen ist, das zu einheitlicheren Produkten führt sowohl hinsichtlich ihres chemischen Aufbaus als auch ihrer Molekulargewichtsverteilung.

Außerdem soll das Verfahren besonders geeignet sein polymere hydroxyalkylterminierte Polysulfide zur Verfügung zu stellen, die sich hervorragend durch weitere Umsetzungen endfunktionalisieren lassen und die für den Aufbau von höhermolekularen Polysulfiden besonders geeignet sind.

Diese Aufgabe wird gelöst durch ein Verfahren zur Herstellung von polymeren hydroxyalkylterminierten Polysulfiden, indem man monomere Bishydroxyalkylpolysulfide mit Formaldehyd in Gegenwart von sauren Katalysatoren umsetzt, das dadurch gekennzeichnet ist, dass man den sauren Katalysator in Form einer festen Säure einsetzt, Wasser und ggf. mitverwendetes Lösungsmittel und den Katalysator abtrennt.

Vorzugsweise wird Formaldehyd in Form von para-Formaldehyd verwendet.

Als feste Säuren sind saure Ionenaustauscher besonders vorteilhaft.

Bevorzugt werden grobporige Ionenaustauscher eingesetzt.

Besonders vorteilhaft sind Ionenaustauscher des Amberlyst-Typs.

Katalysatoren des Amberlyst-Typs sind im Handel erhältlich und werden von der Firma Rohm & Haas vertrieben. Vorteilhafte Amberlyst-Typen sind die Typen, welche unter den Produktionsbezeichnungen Amberlyst 15, 31, 35, 36, 39, 119 und 131 vertrieben werden.

Vorteilhafte feste saure Katalysatoren gemäß der Erfindung sind auch perfluorierte Harze mit Sulfonsäure-Gruppen. Diese sind im Handel z. B. unter der Bezeichnung Nafion von der Firma Du Pont erhältlich.

Als feste Säuren, welche im Rahmen der Erfindung verwendet werden können, zählen auch kationische Ionenaustauscher aus der Klasse der Permutite, Amberlite, Dowex 50 und Lewatite. Als Lewatite, welche von der Firma Bayer vertrieben werden, haben sich besonders vorteilhaft gezeigt die Typen K1131, K1221, K1461, K2431 und K2621.

Ferner sind geeignet Zeolithe in der H-Form, wie z. B. H-Y, H-Beta, H-MCM und dergleichen, die Brönstedzentren in H + austauschen können.

Als monomeres bishydroxyalkylterminiertes Polysulfid wird bevorzugt Dithiodiglycol (Bishydroxyethyldisulfid) eingesetzt.

Diese Verbindung kann durch folgende chemische Formel dargestellt werden:

$$HO - CH_2 - CH_2 - S - S - CH_2 - CH_2 - OH$$

In einer besonders vorteilhaften Ausführungsform wird ein Bishydroxyethyldisulfid eingesetzt, das nach einem Verfahren gemäß dem deutschen Patent DE 103 23 839 hergestellt worden ist. Das dort beschriebene Verfahren ist ein Verfahren zur Herstellung von Dithiodiglycol durch Umsetzung von Mercaptoethanol mit Sauerstoff, bei dem Mercaptoethanol in Gegenwart von Ammoniak und/oder Aminen unter Verwendung von Kupfer- oder Mangan-Salzen mit Sauerstoff oder einem sauerstoffhaltigen Gas umgesetzt wird.

Auf die Offenbarung in dieser Patentschrift wird hier ausdrücklich Bezug genommen; die Offenbarung in dieser Patentschrift wird hiermit eingeschlossen.

Die Durchführung des erfindungsgemäßen Verfahrens kann z. B. auf folgende Weise geschehen: man geht von einem entsprechenden monomeren Dihydroxyalkylpolysulfid insbesondere von einem entsprechenden Disulfid bevorzugt von Diethanoldisulfid aus, das gegebenenfalls in einem geeigneten Lösungsmittel gelöst wird; die Lösung wird sodann mit Formaldehyd insbesondere Paraformaldehyd versetzt. Nach Zugabe eines Katalysators wird die Reaktion bei erhöhter Temperatur insbesondere in einem Bereich von 50 bis 130, vorzugsweise 70°C durchgeführt, wobei zunächst etwa drei Stunden bei 70°C gerührt und anschließend unter Rückfluss erhitzt wird.

Das während der Reaktion entstehende Wasser wird destillativ abgetrennt. Sodann wird weiter unter Rückfluss erhitzt und das gegebenenfalls vorhandene Lösungsmittel im Vakuum abdestilliert. Es empfiehlt sich zur Beseitigung von Lösungsmittelresten mit Inertgas zu strippen. Das gewünschte Reaktionsprodukt wird sodann vom festen Katalysator abgetrennt.

Der Katalysator kann wieder verwendet werden.

In einer weiteren bevorzugten Ausführungsform werden Dithiodiglycole, Paraformaldehyd und der Katalysator ohne Lösungsmittel miteinander gemischt, erwärmt, das Wasser entfernt und der Katalysator nach beendeter Reaktion vom Reaktionsprodukt entfernt.

Das entstehende Reaktionswasser kann aber auch unter Vakuum abgezogen werden. Es empfiehlt sich zur Beendigung der Reaktion bei ca. 120 °C Inertgas einzuleiten, um die restlichen Spuren von Wasser zu entfernen. Wird die Reaktion unter Verwendung eines Lösungsmittels durchgeführt, so sind Lösungsmittel wie insbesondere Toluol, Benzol und dergleichen, die mit Wasser ein Azeotrop bilden, besonders geeignet.

Die Reaktion kann auch kontinuierlich durchgeführt werden.

In diesem Falle eignen sich neben einer Rührkesselkaskade besonders auch ein oder mehrere Strömungsrohre, in welchem der feste Katalysator stationär angeordnet ist.

Hier eignen sich Katalysatoren in Granulat- oder Perlform, über welche Formaldehyd und das monomere Polysulfid insbesondere Dithiodiglycol bei erhöhter Temperatur, vorteilhaft bei erhöhtem Druck, geleitet werden. Das Wasser wird kontinuierlich über Kopf abgezogen, während das Reaktionsprodukt in flüssiger Form ohne weitere Filtration z. B. als Sumpfprodukt anfällt.

Bei diesem Verfahren können auch höhere Temperaturen angewandt werden, z. B. 130 °C und mehr; es kann auch bei schwach erhöhtem Druck gearbeitet werden, z. B. 2 - 3 bar.

Diese Verfahrensweise hat neben dem Vorteil erhöhter Reaktionsgeschwindigkeit auch den Vorteil eines geringeren Austrags an Formaldehyd, welcher sonst häufig mit Reaktionswasser in größerer Menge ausgetragen wird.

Wegen der problemlosen Abtrennbarkeit des Reaktionsproduktes vom festen Katalysator entfällt der sonst gemäß dem Stand der Technik erforderliche Neutralisationsschritt sowie die Abtrennung des Reaktionsprodukts vom neutralisierten Katalysator aus dem Reaktionsgemisch, z. B. durch eine kostenintensive Extraktion. Dies ist sehr vorteilhaft. Außerdem kann der Katalysator mehrmals wieder verwendet werden.

Durch Einstellen des molaren Verhältnisses des monomeren bishydroxyalkylterminierten Polysulfids z. B. von Dithiodiglycol zu Formaldehyd und/oder der Reaktionszeit ist es möglich, das Molekulargewicht des gewünschten hydroxyalkylterminierten polymeren Polysulfids exakt einzustellen. Dabei sind zahlenmittlere Molekulargewichte (Mn) von 500 bis 20 000 möglich.

Überraschenderweise wird durch das erfindungsgemäße Verfahren ein hydroxyalkylterminiertes polymeres Polysulfid erhalten, das eine sehr enge Molekulargewichtsverteilung aufweist und das vorzugsweise eine Uneinheitlichkeit von

U = 1,0-1,4 hat.

Insbesondere bei kontinuierlicher Arbeitsweise in einem Rohrreaktor sind sehr einheitliche Produkte zugänglich.

Außerdem hat sich überraschenderweise herausgestellt, dass bei sonst gleichen Reaktionsbedingungen bei der erfindungsgemäßen Verwendung der festen sauren Katalysatoren im Vergleich zum Arbeiten mit homogenen Katalysatoren gemäß dem bekannten Stand der Technik (z. B. mit p-Toluolsulfonsäure) eine bemerkenswerte Erhöhung der Reaktionsgeschwindigkeit stattfindet.

So zeigt z. B. das Beispiel 4b, bei dem erfindungsgemäß durch Einsatz des Katalysators Amberlyst 15 ein Molekulargewicht von 3 500 g/mol erhalten wird, unter sonst gleichen Bedingungen wie gemäß Beispiel 4a (unter Verwendung eines Katalysators gemäß dem Stand der Technik), dass die Umsetzung schneller verläuft, weil in der gleichen Zeit ein höheres Molekulargewicht nämlich 3 500 anstelle von 2 300 g/mol erreicht wird. Um ein Molekulargewicht von 2 300 g/mol zu erhalten, ist erfindungsgemäß nur etwa die Hälfte der Reaktionszeit wie beim Vergleichsbeispiel 5a nötig.

Da die Einheitlichkeit der erhaltenen Produkte sehr hoch ist, sind diese als solche sehr gut einsetzbar und führen zu gut reproduzierbaren Ergebnissen. Ferner eignen sie sich aber auch besonders für eine weitere Funktionalisierung.

Insbesondere durch Umsetzung mit Epichlorhydrin lassen sich epoxidierte Polysulfide herstellen. Ein solches Verfahren lässt sich vorteilhaft analog dem in der DE 102 23 283 C1 beschriebenen Verfahren durchführen, mit dem Unterschied, dass anstelle von Thiolendgruppen aufweisenden Polysulfiden die hier beschriebenen Hydroxyendgruppen aufweisenden Polysulfide eingesetzt werden.

Diese epoxidierten Produkte sind insbesondere für die Weiterverarbeitung zu Klebstoffen, Dichtstoffen, Überzügen und dergleichen verwendbar.

Weiterhin lassen sich die erfindungsgemäß hergestellten Verbindungen auf einfache Weise durch Einführung von endständigen Doppelbindungen funktionalisieren. Diese Verbindungen können nun ihrerseits wieder einfach weiter funktionalisiert werden.

Verbindungen mit derartigen Doppelbindungen werden in der mit gleicher Priorität hinterlegten deutschen Patentanmeldung, internes Aktenzeichen T 635 näher beschrieben.

Das Verfahren gemäß der Erfindung kann durch folgende Reaktionsgleichung dargestellt werden:

$$n \, CH_2O + (n+1) \, HO\text{-}R\text{-}S\text{-}S\text{-}R\text{-}OH \rightarrow HO\text{-}R\text{-}S\text{-}S\text{-}R\text{-}(O\text{-}CH_2\text{-}O\text{-}R\text{-}S\text{-}S\text{-}R)_n\text{-}OH + n \, H_2O,$$

wobei R ein aliphatischer Kohlenwasserstoffrest der Formel - $(CH_2)_x$ mit x = 2 bis 4 vorzugsweise 2 ist und n den Wert von 5 bis 500 hat.

Die Erfindung wird durch folgende Beispiele näher erläutert:

Beispiel 1

6,8 kg Diethanoldisulfid (85 %) werden in 2,21 Toluol gelöst und mit 1,2 kg Paraformaldehyd (90%) suspendiert und nach Zugabe des Katalysators (stark saurer Kationenaustauscher, 25 g Amberlyst 15) 1 h bei 70°C gerührt. Anschließend wird der Ansatz auf 110°C am Rückfluss erhitzt. Über einen Wasserabscheider wird innerhalb von 5 h das Reaktionswasser abgetrennt. Nachdem die Hauptmenge Wasser aus der Reaktionsmischung entfernt wurde, wird weitere 2 h am Rückfluss erhitzt. Anschließend wird filtriert. Das Lösungsmittel wird im Vakuum abdestilliert. Zur Beseitigung von Lösungsmittelresten wird mit Stickstoff gestrippt.

Es fallen 7,1 kg eines hellgelben niedrigviskosen hydroxyterminierten Polysulfides (15 Pa*s) mit einem zahlenmittleren Molekulargewicht (Mn) von 1000 g/mol an.

Beispiel 2

Durch Variation der Mol-Verhältnisse Diethanoldisulfid zu Paraformaldehyd können die Molmassen der resultierenden Polymere gezielt eingestellt werden.

5,8 kg Diethanoldisulfid (85%) werden in 2,21 Toluol gelöst und mit 1,2 kg Paraformaldehyd (90%) suspendiert und nach Zugabe des Katalysators (stark saurer Kationenaustauscher, Amberlyst 15; 25g) 1 h bei 70°C gerührt. Anschließend wird der Ansatz auf 110°C am Rückfluss erhitzt. Über einen Wasserabscheider wird innerhalb von 5h das Reaktionswasser abgetrennt. Es wird weitere 2 h am Rückfluss erhitzt. Anschließend wird filtriert. Das Lösungsmittel wird im Vakuum abdestilliert. Zur Beseitigung von Lösungsmittelresten wird mit Stickstoff gestrippt.

Es werden 6,1 kg eines hellgelben niedrigviskosen hydroxyterminierten Polysulfides (15 Pa*s) mit einem zahlenmittleren Molekulargewicht (Mn) von 2500 g/mol erhalten.

Beispiel 3

Die Reaktionszeit von Beispiel 2 kann durch Erhöhung der Katalysatormenge auf 60g Amberlyst 15 von 5 auf 2,5 h verringert werden.

Es wird analog zu Beispiel 2 ein Polymer mit einem zahlenmittleren Molekulargewicht (Mn) von 2500 g/mol erhalten.

Beispiel 4 (Hydroxyterminiertes Polysulfid-Katalysatorenvergleich)

Beispiel 4a (Katalysator: p-Toluolsulfonsäure)

750 g Diethanoldisulfid (85%) werden in 450ml Toluol gelöst und mit 201g Paraformaldehyd (90%) suspendiert und nach Zugabe von 4 g p-Toluolsulfonsäure (Katalysator) 1 h bei 70 °C gerührt. Anschließend wird der Ansatz auf 110 °C am Rückfluß erhitzt. Über einen Wasserabscheider wird das Reaktionswasser innerhalb von 3 h abgetrennt. Nachdem die Hauptmenge Wasser aus der Reaktionsmischung entfernt wurde, wird weitere 2 h am Rückfluß erhitzt. Anschließend wird neutralisiert und filtriert. Das Lösungsmittel wird im Vakuum abdestilliert. Zur Beseitigung von Lösungsmittelresten wird mit Stickstoff gestrippt.

Es werden 780 g eines hellgelben niedrigviskosen hydroxyterminierten Polysulfides (15 Pa*s) mit einem zahlenmittleren Molekulargewicht (Mn) von 2300 g/mol erhalten.

Beispiel 4b (Katalysator : Amberlyst 15)

Setzt man Diethanoldisulfid und Paraformaldehyd unter den in Beispiel 3a beschriebenen Bedingungen jedoch in Gegenwart von 4 g Amberlyst 15 (Katalysator) um, erhält man ein Polymer mit einer Molmasse von 3 500 g/mol. Eine Neutralisation erfolgt nicht.

Die Beispiele 4a und 4b zeigen, dass erfindungsgemäß in der gleichen Zeit ein höheres Molekulargewicht erhalten wird, d. h. dass die Umsetzung erheblich schneller stattfindet. Um ein Molekulargewicht von 2 300 g gemäß dem erfindungsgemäßen Verfahren zu erhalten, ist etwa die Hälfte der Zeit notwendig, mit der gemäß Beispiel 4a gearbeitet wird.

Beispiel 5 (lösungsmittelfreie Synthese von hydroxyterminierem PS)

129 g Paraformaldehyd (90%) werden in 545 g Diethanoldisulfid (85%) suspendiert und mit 2 g Amberlyst 15 versetzt. Anschließend wird die Reaktionsmischung unter Rühren auf 120 °C im abgeschlossenen Gefäß (z.B. 11-Glasautoklav der Fa. Büchi) erhitzt. Steigt der Innendruck über 3 bar wird das Gefäß entspannt und wieder geschlossen.

Nach 4 h wird das Gefäß entspannt und für weitere 4 h Stickstoff in die Reaktionsmischung eingeleitet. Anschließend wird auf 50 °C abgekühlt und filtriert.

Es fallen 135 g eines hellgelben niedrigviskosen hydroxyterminierten Polysulfides (15 Pa*s) mit einem zahlenmittleren Molekulargewicht (Mn) von 2000 g/mol an.

**Patentansprüche**

1. Verfahren zur Herstellung von polymeren hydroxyalkyl-terminierten Polysulfiden, indem man monomere Bishydroxyalkylpolysulfide mit Formaldehyd in Gegenwart von sauren Katalysatoren umsetzt, **dadurch gekennzeichnet, dass** man den sauren Katalysator in Form einer festen Säure einsetzt, das Wasser und ggf. mitverwendetes Lösungsmittel und den Katalysator abtrennt.

2. Verfahren nach Anspruch 1, **dadurch gekennzeichnet, dass** man Formaldehyd in Form von Paraformaldehyd verwendet.

3. Verfahren nach Anspruch 1 oder 2, **dadurch gekennzeichnet, dass** man als festen sauren Katalysator saure Ionenaustauscher verwendet.

4. Verfahren nach Anspruch 3, **dadurch gekennzeichnet, dass** man grobporige Ionenaustauscher verwendet.

5. Verfahren nach Anspruch 3 oder 4, **dadurch gekennzeichnet, dass** man Ionenaustauscher des Amberlyst-Typs verwendet.

6. Verfahren nach Anspruch 1, **dadurch gekennzeichnet, dass** man als festen sauren Katalysator ein perfluoriertes Harz mit Sulfonsäure-Gruppen verwendet.

7. Verfahren nach 1 **dadurch gekennzeichnet, das** man als festen sauren Katalysator Zeolithe in der H-Form einsetzt.

8. Verfahren nach einem der Ansprüche 1 bis 7, **dadurch gekennzeichnet, dass** man als monomeres hydroxyalkylterminiertes Polysulfid Dithiodiglycol (Bis - (2-hydroxyethyl)-disulfid bzw. Bishydroxyethyldisulfid) verwendet.

9. Verfahren nach Anspruch 8, **dadurch gekennzeichnet, dass** man als Bishydroxyethyldisulfid ein Bishydroxyethyldisulfid verwendet, das nach einem Verfahren gemäß dem deutschen Patent DE 103 23 839 hergestellt worden ist.

10. Verfahren nach mindestens einem der Ansprüche 1 bis 9, **dadurch gekennzeichnet, dass** man Dithiodiglycole, Paraformaldehyd und den Katalysator ohne Lösungsmittel miteinander mischt, erwärmt, das Wasser und den Katalysator vom Reaktionsprodukt entfernt.

11. Verfahren nach mindestens einem der Ansprüche 1 bis 10, **dadurch gekennzeichnet, dass** man die Reaktion kontinuierlich durchführt.

12. Verfahren nach Anspruch 1 - 11, **dadurch gekennzeichnet, dass** man die Reaktion in einem oder mehreren Strömungsrohren durchführt.

**Claims**

1. A process for the preparation of polymeric hydroxyalkyl-terminated polysulphides, wherein monomeric bis-hydroxyalkyl polysulphides are reacted with formaldehyde in the presence of acid catalysts, **characterized in that** the acid catalyst is used in the form of a solid acid, and water and optionally co-used solvent and the acid catalyst are separated off.

2. A process according to claim 1, **characterized in that** formaldehyde in the form of paraformaldehyde is used.

3. A process according to claim 1 or 2, **characterized in that** acidic ion exchangers are used as solid acid catalyst.

4. A process according to claim 3, **characterized in that** coarsely porous acidic ion exchangers are used.

**5.** A process according to claim 3 or 4, **characterized in that** acidic ion exchangers of the AMBERLYST® type are used.

**6.** A process according to claim 1, **characterized in that** a perfluorinated resin with sulphonic acid groups is used as solid acid catalyst.

**7.** A process according to claim 1, **characterized in that** zeolites in the H-form are used as solid acid catalyst.

**8.** A process according to any one of claims 1-7, **characterized in that** dithiodiglycol(bis-(2-hydroxyethyl)-disulphide or bis-hydroxyethyl disulphide) is used as monomeric hydroxyalkyl-terminated polysulphide.

**9.** A process according to claim 8, **characterized in that** the bis-hydroxyethyl disulphide used is a bis-hydroxyethyl disulphide prepared according to a process in accordance with German Patent DE 103 23 839.

**10.** A process according to at least one of claims 1-9, **characterized in that** dithiodiglycols, paraformaldehyde, and the catalyst are mixed with one another without solvent and heated, and the water and the catalyst are removed from the reaction product.

**11.** A process according to at least one of claims 1-10, **characterized in that** the reaction is carried out continuously.

**12.** A process according to claims 1-11, **characterized in that** the reaction is carried out in one or more tubular reactors.

## Revendications

**1.** Procédé de préparation de polysulfures polymères à terminaison hydroxyalkyle, dans lequel des bis-hydroxyalkylpolysulfures monomères sont mis à réagir avec du formaldéhyde en présence de catalyseurs acides, **caractérisé en ce que** le catalyseur acide est utilisé sous la forme d'un acide solide, et l'eau et éventuellement le solvant co-utilisé et le catalyseur acide sont séparés.

**2.** Procédé selon la revendication 1, **caractérisé en ce que** du formaldéhyde sous la forme de paraformaldéhyde est utilisé.

**3.** Procédé selon la revendication 1 ou 2, **caractérisé en ce que** des échangeurs d'ions acides sont utilisés en tant que catalyseur acide solide.

**4.** Procédé selon la revendication 3, **caractérisé en ce que** des échangeurs d'ions acides grossièrement poreux sont utilisés.

**5.** Procédé selon la revendication 3 ou 4, **caractérisé en ce que** des échangeurs d'ions acides de type AMBERLYST® sont utilisés.

**6.** Procédé selon la revendication 1, **caractérisé en ce qu'**une résine perfluorée ayant des groupes acides sulfoniques est utilisée en tant que catalyseur acide solide.

**7.** Procédé selon la revendication 1, **caractérisé en ce que** des zéolites sous forme H sont utilisées en tant que catalyseur acide solide.

**8.** Procédé selon l'une quelconque des revendications 1 à 7, **caractérisé en ce que** le dithiodiglycol(bis(2-hydroxyéthyl) disulfure ou bis-hydroxyéthyldisulfure) est utilisé en tant que polysulfure monomère à terminaison hydroxyalkyle.

**9.** Procédé selon la revendication 8, **caractérisé en ce que** le bis-hydroxyéthyldisulfure utilisé est un bishydroxyéthyldisulfure préparé selon le procédé selon le brevet allemand DE 103 23 839.

**10.** Procédé selon au moins l'une quelconque des revendications 1 à 9, **caractérisé en ce que** les dithiodiglycols, le paraformaldéhyde et le catalyseur sont mélangés les uns avec les autres sans solvant et chauffés, et l'eau et le catalyseur sont éliminés du produit réactionnel.

**11.** Procédé selon au moins l'une quelconque des revendications 1 à 10, **caractérisé en ce que** la réaction est réalisée de manière continue.

**12.** Procédé selon au moins l'une quelconque des revendications 1 à 11, **caractérisé en ce que** la réaction est réalisée dans un ou plusieurs réacteurs tubulaires.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US PS2582605 A
- DE 10220383
- DE 4214847
- EP 43043 A
- US 3817947 A
- US 3335201 A
- US 3301831 A
- US 4124645 A
- DE 10323839
- DE 10223283 C1